# EUROPÄISCHE PATENTSCHRIFT

(11) **EP 0 934 961 B1**
(45) Veröffentlichungstag und Bekanntmachung des Hinweises auf die Patenterteilung: **04.04.2001**
(21) Anmeldenummer: 98115983.3
(22) Anmeldetag: 25.08.1998
(51) Int. Cl.: C08G 18/48, C08G 65/26

(54) **Verfahren zur Herstellung von Polyurethan-Weichschaumstoffen**
Manufacturing process for flexible polyurethane foams
Procédé de manufacture de mousse de polyurethane flexibles

(30) Priorität: 25.08.1997 DE 19736976
(43) Veröffentlichungstag der Anmeldung: 11.08.1999
(73) Patentinhaber: BASF AKTIENGESELLSCHAFT, 67056 Ludwigshafen (DE)
(72) Erfinder: Wetterling, Monika, 01968 Senftenberg (DE); Schuster, Marita, 01968 Senftenberg (DE); Guettes, Bernd, 03238 Sallgast (DE); Kuhn, Simone, 01979 Lauchhammer (DE)

(56) Entgegenhaltungen:
- EP-A- 0 132 302
- EP-A- 0 153 821
- EP-A- 0 547 764

## Beschreibung

Die Erfindung bezieht sich auf Verfahren zur Herstellung von Weichschaumstoffen auf der Basis von Polyisocyanat-Polyadditionsprodukten durch Umsetzung von Polyisocyanaten mit gegenüber Isocyanaten reaktive Verbindungen in Gegenwart von Katalysatoren, Treibmitteln und gegebenenfalls Flammschutzmitteln, Hilfs- und/ oder Zusatzstoffen sowie die mit diesem Verfahren herstellbaren Weichschaumstoffe.

Die Herstellung von Polyurethanweichschaumstoffen durch Umsetzung von Polyisocyanaten, beispielsweise aromatischen Diisocyanaten mit gegenüber Isocyanaten reaktiven Verbindungen, beispielsweise Polyether- und/oder Polyesterpolyalkohole, im Folgenden auch allgemein als Polyole bezeichnet, und gegebenenfalls Kettenverlängerungs- und/oder Vernetzungsmitteln in Gegenwart von Katalysatoren, Treibmitteln und gegebenenfalls Flammschutzmitteln, Hilfs- und/oder Zusatzstoffen ist allgemein bekannt. Eine Übersicht über Polyole, ihre Herstellung, Eigenschaften und Anwendungen in der Polyurethanchemie wird z.B. im "Kunststoff-Handbuch", Band 7, Polyurethane, 3. Auflage, 1993, herausgegeben von G. Oertel, Carl Hanser Verlag, München gegeben.

Zur Herstellung von Weichschaumstoffen mit einer erhöhten Härte ist es des Weiteren bekannt, neben üblichen Polyolen mit einer durchschnittlichen Funktionalität von 2 bis 3 auch Polyole mit einer höheren Funktionalität einzusetzen, die beispielsweise durch Anlagerung von Alkylenoxiden an Startsubstanzen mit einer Funktionalität von mindestens 4 hergestellt werden können. Diese Anlagerung der Alkylenoxide kann wie in US 41 11 865, US 42 88 562 oder DD-A 248129 beschrieben in einem Gemisch aus üblichen 3-funktionellen Startsubstanzen und mindestens 4-funktionellen Startsubstanzen erfolgen, wobei die Startsubstanzen bereits vor der Alkoxylierung gemischt werden können oder aber voneinander getrennt mit den Alkylenoxiden umgesetzt und erst anschließend als Vorpolymerisate gemischt und mit weiteren Alkylenoxiden alkoxyliert werden können.

Wesentliche Nachteile dieser Verfahren bestehen darin, daß die Alkoxylierung insbesondere von Zuckern als Substanzen mit einer Funktionalität von mindestens 4 unbefriedigend verläuft, die Reaktionsgemische Inhomogenitäten aufweisen und die hergestellten Polyole eine für die Herstellung von hochelastischen Polyurethanweichschaumstoffen ungünstige Molekulargewichtsverteilung aufweisen.

Ziel der vorliegenden Erfindung war es somit, ein Verfahren zur Herstellung von Weichschaumstoffen auf Basis von Polyisocyanat-Polyadditionsprodukten durch Umsetzung von gegenüber Isocyanaten reaktiven Verbindungen mit Isocyanaten zu entwickeln, wobei die Weichschaumstoffe eine höhere Härte, einen niedrigen Druckverformungsrest und eine hohe Zugfestigkeit aufweisen sollten.

Diese Aufgabe konnte dadurch gelöst werden, daß man als gegenüber Isocyanaten reaktive Substanzen Polyetherpolyalkohole (c) einsetzt, die erhältlich sind durch eine Anlagerung von Alkylenoxiden an Substanzen mit aktiven Wasserstoffen, wobei man in einer ersten Stufe mindestens eine Substanz (a) enthaltend 2 oder 3 aktive Wasserstoffe gegebenenfalls in Gegenwart von Katalysatoren mit mindestens einem Alkylenoxid umsetzt, anschließend mindestens eine Substanz (b), die mindestens 4 aktive Wasserstoffe aufweist, und gegebenenfalls weiteren Katalysator zu dem Reaktionsgemisch der ersten Stufe zugibt und danach diese Mischung in einer zweiten Stufe mit mindestens einem Alkylenoxid umsetzt.

Als Startsubstanzen (a) kommen allgemein übliche Verbindungen, die 2 oder 3 aktive Wasserstoffe aufweisen, in Betracht. Als Verbindungen (a) können beispielsweise aliphatische, araliphatische und/oder aromatische Amine und/oder Imine, die gegebenenfalls zusätzlich zu der Aminogruppe bzw. Iminogruppe eine Hydroxylgruppe aufweisen, und bevorzugt Ethylenglykol, 1,2- und/ oder 1,3-Propandiol, 1,2-, 1,3- und/oder 1,4-Butandiol, Di-, Tri-und/oder Tetra-ethylen, -propylen- und/oder butylen-glykol, Trimethylolpropan und/oder Glycerin eingesetzt werden. Bevorzugt als Verbindung (a) können des Weiteren Anlagerungsprodukte mit einem Molekulargewicht von 100 bis 1000 von Alkylenoxiden an 2- und/ oder 3-funktionelle Alkohole verwendet werden.

Die Umsetzung in der ersten Stufe durch Anlagerung von üblichen Alkylenoxide, beispielsweise Tetrahydrofuran, Styroloxid, 1,3-Propylenoxid, 1,2- und/oder 1,3 Butylenoxid und/oder Ethylenoxid, bevorzugt Ethylenoxid, an die in der Mischung enthaltenden Komponenten (a) und (b) kann nach allgemein bekannten Verfahren durchgeführt werden. Beispielsweise kann in einem üblichen Reaktor (Rührkesselreaktoren, Rohrreaktoren usw.), der bevorzugt mit üblichen Einrichtungen zur Kühlung des Reaktionsgemisches ausgestattet sein kann, die Mischung enthaltend die Startsubstanz (a) bei einer Temperatur von beispielsweise 70 bis 160, bevorzugt 80 bis 150°C mit dem Alkylenoxid versetzt werden. Die Zugabe der Alkylenoxide kann bevorzugt derart erfolgen, daß die Reaktionstemperatur innerhalb eines Bereiches von 70 bis 160, bevorzugt 80 bis 150°C, liegt. Die Reaktionszeiten richten sich üblicherweise nach dem Temperaturverlauf des Reaktionsgemisches und sind somit unter anderem von der Ansatzgröße, dem Reaktortyp und den Kühleinrichtungen abhängig. Die Reaktion kann man bei Drücken zwischen 0,1 MPa und 1 MPa, vorzugsweise zwischen 0,1 MPa und 0,7 MPa durchführen.

Bevorzugt kann der Startsubstanz (a) vor und/oder während der Umsetzung mit den Alkylenoxiden eine übliche Menge, beispielsweise 0,02 bis 1 Gew.-%, bevorzugt 0,04 bis 0,08 Gew.-%, bezogen auf die Komponente (a), einer starken Base zugegeben werden. Als starke Base können bevorzugt Alkalimetallhydroxide, besonders bevorzugt NaOH und/oder KOH in gelöster oder bevorzugt fester Form eingesetzt werden. Beispielsweise kann die Komponente (a) vor der Umsetzung mit den Alkylenoxiden bei üblichen Temperaturen und vermindertem Druck in Gegenwart der genannten starken Basen destilliert werden, so daß zum Abschluß der Destillation die Komponente (a) zu mindestens teilweise als Alkoholat vorliegt. Die Komponente (a) wird bevorzugt als Alkoholat bei der Anlagerung der Alkylenoxide in der ersten Stufe eingesetzt.

Das Reaktionsprodukt der ersten Stufe weist üblicherweise eine Hydroxylzahl von 100 bis 1000, bevorzugt 200 bis 900, besonders bevorzugt 250 bis 900 und eine Funktionalität von > 2 auf.

Im Anschluß an die erste Stufe wird die Startsubstanz (b), die mindestens 4 aktive Wasserstoffe aufweist, zu dem Reaktionsgemisch der ersten Stufe, das nicht notwendigerweise durch übliche Verfahren aufgearbeitet sein muß, zugegeben und bevorzugt intensiv mit dem Reaktionsgemisch vermischt.

Als Startsubstanz (b) kann man Alkohole mit einer Funktionalität von ≥ 4, beispielsweise Zuckeralkohole und /oder Saccharide, bevorzugt Pentaerythrit, Sorbit, und/oder Saccharose einsetzen. Bevorzugt kann man des Weiteren Anlagerungsprodukte mit einem Molekulargewicht von 100 bis 1000 von Alkylenoxiden an mindestens 4-funktionelle Alkohole verwenden.

Es ist auch möglich, ein Teil, insbesondere bis zu 80 Gew.-%, der Startsubstanz (b) bereits bei der Umsetzung in der ersten Stufe mit zuzusetzen. Der teilweise Zusatz der Substanz (b) kann einmalig zu Beginn und/oder portionsweise im Laufe der Umsetzung mit Alkylenoxid in der 1. Stufe im Zeitraum von 0,5-1,5 h nach Dosierbeginn des Alkylenoxids erfolgen.

Das molare Verhältnis der Startsubstanzen (a) : (b) in der Mischung, d.h. das molare Verhältnis von in der ersten Stufe eingesetztem (a) zu in der zweiten Stufe eingesetztem (b) beträgt in dem erfindungsgemäßen Verfahren üblicherweise 5 : 1 bis 0,2 : 1, besonders bevorzugt 2 : 1 bis 0,5 : 1.

Gegebenenfalls kann dem Reaktionsprodukt der ersten Stufe vor, während oder nach der Zugabe der Startsubstanz (b) eine starke Base, die bereits für die erste Stufe beschrieben wurde, zugegeben werden, wobei auch die Startsubstanz (b) in die zweite Stufe wie auch die Startsubstanz (a) in der ersten Stufe als Alkoholat eingesetzt werden kann.

Die Umsetzung in der zweiten Stufe nach der Zugabe der Startsubstanz (b) zu dem Reaktionsprodukt der ersten Stufe durch Anlagerung von üblichen Alkylenoxide, beispielsweise Propylenoxid, Butylenoxid und/oder Ethylenoxid, bevorzugt Ethylenoxid, an die in der Mischung enthaltenden Komponenten (a) und (b) kann nach allgemein bekannten Verfahren durchgeführt werden. Beispielsweise kann in einem üblichen Reaktor (Rührkesselreaktoren, Rohrreaktoren usw.), bevorzugt dem selben Reaktor, in dem bereits die erste Stufe durchgeführt wurde und der bevorzugt mit üblichen Einrichtungen zur Kühlung des Reaktionsgemisches ausgestattet sein kann, die Reaktionsmischung bei einer Temperatur von beispielsweise 70 bis 160, bevorzugt 80 bis 150°C mit dem Alkylenoxid versetzt werden. Die Zugabe der Alkylenoxide kann bevorzugt derart erfolgen, daß die Reaktionstemperatur innerhalb eines Bereiches von 70 bis 160, bevorzugt 80 bis 150°C, liegt. Die Reaktionszeiten richten sich üblicherweise nach dem Temperaturverlauf des Reaktionsgemisches und sind somit unter anderem von der Ansatzgröße, dem Reaktortyp und den Kühleinrichtungen abhängig. Die Reaktion kann man bei Drücken zwischen 0,1 MPa und 1 MPa, vorzugsweise zwischen 0,1 MPa und 0,7 MPa durchführen.

Es ist auch möglich, ein Teil, insbesondere bis zu 40 % der insgesamt eingesetzten Komponente (a) zur Umsetzung in der 2. Stufe, gegebenenfalls gemeinsam mit der Startsubstanz (b) zuzumischen.

Bevorzugt wird die Alkoxylierung zum Abschluß mit Ethylenoxid durchgeführt, so daß die erfindungsgemäß hergestellten Polyole endständig angeordnete Oxyethyleneinheiten aufweisen, wobei insbesondere 5 bis 30 % Ethylenoxid am Ende angelagert werden.

Das Reaktionsprodukt der zweiten Stufe kann man in bekannter Weise reinigen, z.B. indem man das Reaktionsgemisch mit Mineralsäuren, wie beispielsweise Salzsäure, Schwefelsäure und/oder vorzugsweise Phosphorsäure, mit organischen Säuren oder mit Kohlendioxid auf einen pH von üblicherweise 6 bis 8 nahezu neutralisiert, dem Polyetherpolyalkohol durch übliche Vakuumdestillation das Wasser entzieht und die Salze abfiltriert.

Das erfindungsgemäß hergestellte Polyolgemisch weist bevorzugt eine mittlere Funktionalität von > 3 bis 7 und eine mittlere Hydroxylzahl von 20 bis 200 auf, wobei die Daten Durchschnittswerte darstellen, die durch übliche Bestimmungsmethoden ermittelt werden können.

Die erfindungsgemäße Herstellung der Polyurethanweichschaumstoffe kann durch allgemein bekannte und beispielsweise im "Kunststoff-Handbuch" loc. cit. beschriebene Umsetzungen der erfindungsgemäßen Polyetherole (c) mit allgemein üblichen Isocyanaten, beispielsweise in direkter Umsetzung oder mit dem Prepolymerverfahren, durchgeführt werden.

Zu den für die erfindungsgemäße Herstellung der Polyurethanweichschaumstoffe verwendbaren Ausgangskomponenten ist im einzelnen folgendes beispielhaft auszuführen:

Als organische Di- und/oder Polyisocyanate können beispielsweise die in DE-A 44 08 430 auf der Seite 3, Zeile 22 bis 57 beschriebenen Isocyanate verwendet werden.

Zusätzlich zu den erfindungsgemäßen Polyetherpolyalkoholen (c) können als gegenüber Isocyanaten reaktive Verbindungen übliche Polyether-, Polyester- und/oder Polyetherpolyesterpolyole, beispielsweise bekannte Polyetherpolyole mit einer Funktionalität von 1,8 bis 4,0 und einem Molekulargewicht von durchschnittlich 401 bis 8000, wie sie beispielsweise in DE-A 44 08 430, Seite 3, Zeile 58 bis Seite 4, Zeile 24 beschrieben sind, und/oder polymermodifizierte Polyetherpolyole, bevorzugt Pfropfpolyetherpolyole, wie sie beispielsweise in DE-A 44 08 430, Seite 4, Zeile 25 bis 40 beschrieben sind, eingesetzt werden. Bevorzugt werden als gegenüber Isocyanaten reaktive Verbindungen eine Polyolmischung verwendet, die enthält
- 5 bis 80 Gew.-%: der erfindungsgemäßen Polyetherpolyalkohole (c) mit einer mittleren Funktionalität von > 3 bis 7 und einer Hydroxylzahl von 20 bis 200 erhältlich durch eine Anlagerung von Alkylenoxiden an Substanzen mit aktiven Wasserstoffen, wobei man in einer ersten Stufe mindestens eine Substanz (a) enthaltend 2 oder 3 aktive Wasserstoffe gegebenenfalls in Gegenwart von Katalysatoren mit mindestens einem Alkylenoxid umsetzt, anschließend mindestens eine Substanz (b), die mindestens 4 aktive Wasserstoffe aufweist, und gegebenenfalls weiteren Katalysator zu dem Reaktionsgemisch der ersten Stufe zugibt und danach diese Mischung in einer zweiten Stufe mit mindestens einem Alkylenoxid umsetzt,
- 0,1 bis 50 Gew.-%: eines Polyetherpolyalkohols mit einer Funktionalität von 1,8 bis 3 und einer Hydroxylzahl von 20 bis 100 mg KOH/g,
- 10 bis 50 Gew.-%: eines Pfropf-Polyetherpolyalkohols und
- 0,1 bis 5 Gew.-%: Glycerin,
wobei die Gewichtsangaben auf das Gesamtgewicht der Polyolmischungen bezogen sind.

Als Kettenverlängerung- und/oder Vernetzungsmittel, d.h. als Verbindungen, die gegenüber Isocyanaten reaktiv sind, können gegebenenfalls zusätzlich zu den erfindungsgemäßen Polyetherpolyalkoholen allgemein für diesen Zweck bekannte Substanzen mit einem Molekulargewicht von 18 bis 400 eingesetzt werden, wie sie beispielsweise in DE-A 44 08 430 auf der Seite 4, Zeile 68 bis Seite 5, Zeile 5 beschrieben sind.

Um die Umsetzung der gegenüber den Isocyanaten reaktiven Verbindungen mit den Isocyanaten zu beschleunigen, können allgemein bekannte Katalysatoren verwendet werden, wie sie beispielsweise in DE-A 44 08 430 auf der Seite 5, Zeile 52 bis Seite 6, Zeile 3 beschrieben werden.

Als Treibmittel können übliche Treibmittel verwendet werden, beispielsweise die in DE-A 44 08 430 auf der Seite 5, Zeile 30 bis Zeile 51 beschriebenen. Bevorzugt werden als Treibmittel Wasser, Formiate und/oder Kohlendioxid verwendet.

Zur Erhöhung der Flammwidrigkeit der Polyurethane kann es von Vorteil sein, die Umsetzung der Isocyanate mit den gegenüber den Isocyanaten reaktiven Verbindungen in Gegenwart von üblichen Flammschutzmitteln, wie sie beispielsweise in DE-A 44 08 430 auf der Seite 5, Zeile 6 bis Zeile 29 beschrieben sind durchzuführen.

Als Hilfs- und Zusatzstoffe können übliche Substanzen verwendet werden, beispielsweise die in DE-A 44 08 430 auf der Seite 6, Zeile 4 bis Zeile 16 beschriebenen.

Nähere Angaben über die oben genannten anderen üblichen Hilfs-und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der Polyurethanweichschaumstoffe werden die organischen, gegebenenfalls modifizierten Polyisocyanate mit den gegenüber Isocyanaten reaktiven Verbindungen enthaltend die erfindungsgemäßen Polyetherpolyalkohole (c) in Gegenwart von Treibmitteln, Katalysatoren und gegebenenfalls Flammschutzmitteln, Hilfsmitteln und/oder Zusatzstoffen bei Temperaturen von 0 bis 100°C, vorzugsweise 15 bis 80°C, in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die gegenüber Isocyanaten reaktiven Verbindungen vorliegen und, sofern Wasser als Treibmittel eingesetzt wird, das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die PU-Weichschaumstoffe werden zweckmäßigerweise nach dem one shot-Verfahren durch Vermischen von zwei Komponenten A und B hergestellt, wobei die gegenüber Isocyanaten reaktiven Verbindungen, die Flammschutzmittel, die Treibmittel, die Katalysatoren und gegebenenfalls die Hilfs- und/oder Zusatzstoffe zu der sogenannten A-Komponenten vereinigt und als B-Komponente die Polyisocyanate, gegebenenfalls im Gemisch mit Flammschutzmitteln, Hilfs-und/oder Zusatzstoffen und inerten, physikalisch wirkenden Treibmitteln verwendet werden. Somit müssen die A- und B-Komponente vor Herstellung der Polyurethanweichschaumstoffe nur noch intensiv gemischt werden. Die Reaktionsmischungen können in offenen oder geschlossenen Formwerkzeugen sowie zu Blockschaumstoff verschäumt werden.

Die nach dem erfindungsgemäßen Verfahren hergestellten Polyurethanweichschaumstoffe besitzen Dichten von 30 bis 150 g/Liter, vorzugsweise von 40 bis 100 g/Liter. Sie weisen ein gutes mechanisches Eigenschaftsniveau auf. Die Formschaumstoffe finden vorzugsweise Verwendung als Polsterelemente, z.B. als Sitzpolster, Armlehnen, Kopfstützen, Sonnenblenden und Sicherheitsabdeckungen in Fahrzeugkabinen, vorzugsweise Kraftfahrzeugen und Flugzeugen.

Die Erfindung soll an nachstehenden Beispielen näher erläutert werden. Die in den Beispielen genannten Teile beziehen sich auf das Gewicht.

### Beispiel 1:

### Herstellung des erfindungsgemäßen Polyols

In einem 50 1 Reaktor wurden nacheinander 2,57 kg Glycerin und 0,28 kg 45 %-ige wäßrige Kalilauge eingefüllt, mit Stickstoff gespült und auf 110°C erwärmt. In einem Zeitraum von 2 h wurde unter einem Vakuum von 10 mbar zur Alkoholatbildung Wasser abdestilliert. Anschließend wurden 10 kg Propylenoxid zudosiert und bei 100°C zur Umsetzung gebracht. Nach einer Reaktionszeit von 2,5 h wurden in einer zweiten Stufe 6,38 kg Saccharose und 23,3 kg Propylenoxid zu dem Reaktionsgemisch gegeben und zur Umsetzung gebracht. Nach Erreichen einer Hydroxylzahl von 280 mg KOH/g wurden 1,8 kg 45 %-ige wäßrige Kalilauge zudosiert und anschließend für 2 h ein Vakuum von 1,5 mbar angelegt. 5,4 kg dieses Reaktionsgemisches wurden anschließend in einem 50 1 Reaktor eingefüllt, mit Stickstoff gespült und auf 110°C erwärmt. Zu dem Reaktionsgemisch wurden 37,5 kg Propylenoxid gegeben und für 7,5 h umgesetzt. Danach erfolgte eine Zugabe von 10,7 kg Ethylenoxid und eine Umsetzung bei 105°C für 1,5 h. Anschließend erfolgte eine Neutralisierung des Polyolgemisches mit wäßriger Phosphorsäure, Destillation und Filtration.

Das Polyolgemisch wies die folgenden Kennzahlen auf:

| | |
|---|---|
| Hydroxylzahl | 28,5 mg KOH/g |
| Wasser-Gehalt | 0,08 % |
| Viskosität bei 25 °C | 1020 mPas |
| Säurezahl | 0,09 mg KOH/g |
| pH-Wert | 7,6 |
| Jodzahl | 0,02 meg/g |

### Beispiel 2:

Herstellung eines Polyurethanweichschaumstoffes mit dem erfindungsgemäßen Polyol

Die im Folgenden beschriebenen Komponenten A und B wurden derart in einem Formwerkzeug miteinander umgesetzt, daß das molare Verhältnis der NCO-Gruppen zu der Summe der gegenüber Isocyanaten reaktiven Wasserstoffe 1 : 1 betrug.

Die Komponenten A und B wurden bei 23°C 20 Sekunden intensiv gemischt. 700 g der erhaltenen Reaktionsmischung wurden in ein auf 30°C temperiertes metallisches Formwerkzeug mit den inneren Abmessungen 40 x 40 x 10 cm eingefüllt, das Formwerkzeug geschlossen und die Reaktionsmischung aufschäumen gelassen.

Der gebildete Polyurethan-Formkörper wurde nach 8 Minuten entformt.
Komponente A) Toluylendiisocyanat 80/20
Komponente B) Polyolkomponente, bestehend aus:

| | |
|---|---|
| 43,5 Gew.-Teile | des Polyols hergestellt in Beispiel 1 |
| 20 Gew.-Teile | eines Polyetherpolyols auf der Basis Glycerin, Propylenoxid und Ethylenoxid mit einer Hydroxylzahl von 35 mg KOH/g |
| 30 Gew.-Teile | eines Acrylnitril/Styrol modifizierten Polyetherpolyalkohols mit 30 % Feststoffanteil |
| 1 Gew.-Teil | Glycerin |
| 0,2 Gew.-Teile | eines Katalysators (Niax A1 der Firma Air Products) |
| 0,3 Gew.-Teile | eines Katalysators (Dabco X8154 der Firma Air Products) |
| 0,5 Gew.-Teile | eines Silikonstabilisators (B8629 der Firma Goldschmidt) |
| 3,5 Gew.-Teile | Wasser |

Die mechanischen Eigenschaften des Polyurethanweichschaumstoffes sind in der nachfolgenden Tabelle aufgeführt.

### Vergleichsbeispiel 3:

Herstellung eines Polyurethanweichschaumstoffes mit einem bekannten Polyol

Die im Folgenden beschriebenen Komponenten A und B wurden derart in einem Formwerkzeug miteinander umgesetzt, daß das molare Verhältnis der NCO-Gruppen zu der Summe der gegenüber Isocyanaten reaktiven Wasserstoffe 1 : 1 betrug.

Die Komponenten A und B wurden bei 23°C 10 Sekunden intensiv gemischt. 700 g der erhaltenen Reaktionsmischung wurden in ein auf 30°C temperiertes metallisches Formwerkzeug mit den inneren Abmessungen 40 x 40 x 10 cm eingefüllt, das Formwerkzeug geschlossen und die Reaktionsmischung aufschäumen gelassen.

Der gebildete Polyurethan-Formkörer wurde nach 8 Minuten entformt.
Komponente A) Toluylendiisocyanat 80/20
Komponente B) Polyolkomponente, bestehend aus:

| | |
|---|---|
| 63,8 Gew.-Teile | eines Polyetherpolyols auf der Basis Glycerin, Propylenoxid und Ethylenoxid mit einer Hydroxylzahl von 35 mg KOH/g |
| 30 Gew.-Teile | eines Acrylnitril/Styrol modifizierten Polyetherpolyalkohols mit 30 % Feststoffanteil |
| 1 Gew.-Teil | Glycerin |
| 0,2 Gew.-Teile | eines Katalysators (Niax A1 der Firma Air Products) |
| 0,3 Gew.-Teile | eines Katalysators (Dabco X8154 der Firma Air Products) |
| 0,5 Gew.-Teile | eines Silikonstabilisators (B8629 der Firma Goldschmidt) |
| 3,5 Gew. Teile | Wasser |

Die mechanischen Eigenschaften des Polyurethanweichschaumstoffes sind in der nachfolgenden Tabelle aufgeführt.

**Tabelle**

| Beispiel | Dichte nach DIN 53420 [g/l] | Druckverformungsrest nach DIN 53572 [%] | Bruch-dehnung nach DIN 53571 [%] | Rückprallelastizität [%] | Stauchhärte nach DIN 53571 [kPa] |
|---|---|---|---|---|---|
| 2 | 33 | 7,1 | 164 | 66 | 3,6 |
| 3 | 33 | 7,6 | 164 | 67 | 2,2 |

Die Aufgabe der vorliegenden Erfindung, d.h. Weichschaumstoffe mit einer höheren Härte und einem geringeren Druckverformungsrest bereitzustellen, konnte somit mit der erfindungsgemäßen technischen Lehre gelöst werden.

## Patentansprüche

1. Verfahren zur Herstellung von Weichschaumstoffen auf der Basis von Polyisocyanat-Polyadditionsprodukten durch Umsetzung von Polyisocyanaten mit gegenüber Isocyanaten reaktiven Verbindungen in Gegenwart von Katalysatoren, Treibmitteln und gegebenenfalls Flammschutzmitteln, Hilfs- und/oder Zusatzstoffen, dadurch gekennzeichnet, daß man als gegenüber Isocyanaten reaktive Substanzen Polyetherpolyalkohole (c) einsetzt, die erhältlich sind durch eine Anlagerung von Alkylenoxiden an Substanzen mit aktiven Wasserstoffen, wobei man in einer ersten Stufe mindestens eine Substanz (a) enthaltend 2 oder 3 aktive Wasserstoffe gegebenenfalls in Gegenwart von Katalysatoren mit mindestens einem Alkylenoxid umsetzt, anschließend mindestens eine Substanz (b), die mindestens 4 aktive Wasserstoffe aufweist, und gegebenenfalls weiteren Katalysator zu dem Reaktionsgemisch der ersten Stufe zugibt und danach diese Mischung in einer zweiten Stufe mit mindestens einem Alkylenoxid umsetzt.

2. Verfahren nach Anspruch 1, dadurch gekennzeichnet, daß man als (a) Ethylenglykol, 1,2- und/oder 1,3-Propandiol, 1,2-, 1,3- und/oder 1,4-Butandiol, Di-, Tri- und/oder Tetra-ethylen-, -propylen- und/oder butylen-glykol, Trimethylo-propan und/oder Glycerin verwendet.

3. Verfahren nach Anspruch 1, dadurch gekennzeichnet, daß man als (a) Anlagerungsprodukte mit einem Molekulargewicht von 100 bis 1000 von Alkylenoxiden an 2- und/oder 3-funktionelle Alkohole verwendet.

4. Verfahren nach einem der Ansprüche 1 bis 3, dadurch gekennzeichnet, daß man als (b) Pentaerythrit, Sorbit und/oder Saccharose einsetzt.

5. Verfahren nach einem der Ansprüche 1 bis 3, dadurch gekennzeichnet, daß man als (b) Anlagerungsprodukte mit einem Molekulargewicht von 100 bis 1000 von Alkylenoxiden an mindestens 4-funktionelle Alkohole verwendet.

6. Verfahren nach einem der Ansprüche 1 bis 5, dadurch gekennzeichnet, daß man in der zweiten Stufe zum Abschluß Ethylenoxid an den Polyetherpolyalkohol anlagert.

7. Verfahren nach einem der Ansprüche 1 bis 6, dadurch gekennzeichnet, daß man Polyetherpolyalkohole (c) mit einer mittleren Funktionalität von >3 bis 7 und einer mittleren Hydroxylzahl von 20 bis 200 einsetzt.

8. Verfahren nach einem der Ansprüche 1 bis 6, dadurch gekennzeichnet, daß man als gegenüber Isocyanaten reaktive Verbindungen eine Mischung enthaltend:
5 bis 80 Gew.-% eines Polyetherpolyalkohols mit einer mittleren Funktionalität von >3 bis 7 und einer Hydroxylzahl von 20 bis 200 erhältlich durch eine Anlagerung von Alkylenoxiden an Substanzen mit aktiven Wasserstoffen, wobei man in einer ersten Stufe mindestens eine Substanz (a) enthaltend 2 oder 3 aktive Wasserstoffe gegebenenfalls in Gegenwart von Katalysatoren mit mindestens einem Alkylenoxid umsetzt, anschließend mindestens eine Substanz (b), die mindestens 4 aktive Wasserstoffe aufweist, und gegebenenfalls weiteren Katalysator zu dem Reaktionsgemisch der ersten Stufe zugibt und danach diese Mischung in einer zweiten Stufe mit mindestens einem Alkylenoxid umsetzt,
0,1 bis 50 Gew.-% eines Polyetherpolyalkohols mit einer Funktionalität von 1,8 bis 3 und einer Hydroxylzahl von 20 bis 100 mg KOH/g,
10 bis 50 Gew.-% eines Pfropf-Polyetherpolyalkohols und
0,1 bis 5 Gew.-% Glycerin
einsetzt.

9. Weichschaumstoffe auf der Basis von Polyisocyanat-Polyadditionsprodukten erhältlich durch ein Verfahren gemäß einem der Ansprüche 1 bis 8.

## Claims

1. A process for producing flexible foams based on polyisocyanate polyaddition products by reacting polyisocyanates with compounds which are reactive toward isocyanates in the presence of catalysts, blowing agents and, if desired, flame retardants, auxiliaries and/or additives, wherein polyether polyalcohols (c) which are obtainable by addition of alkylene oxides onto substances containing active hydrogens are used as substances which are reactive toward isocyanates, where, in a first stage, at least one substance (a) containing 2 or 3 active hydrogens is reacted with at least one alkylene oxide in the presence or absence of catalysts, subsequently at least one substance (b) which contains at least four active hydrogens and, if desired, further catalyst is added to the reaction mixture from the first stage and this mixture is then reacted in a second stage with at least one alkylene oxide.

2. A process as claimed in claim 1, wherein ethylene glycol, 1,2- and/or 1,3-propanediol, 1,2-, 1,3- and/or 1,4-butanediol, di-, tri- and/or tetra-ethylene, -propylene and/or butylene glycol, trimethylolpropane and/or glycerol is used as (a).

3. A process as claimed in claim 1, wherein addition products having a molecular weight of from 100 to 1000 of alkylene oxides and 2- and/or 3-functional alcohols are used as (a).

4. A process as claimed in any of claims 1 to 3, wherein pentaerythritol, sorbitol and/or sucrose is used as (b).

5. A process as claimed in any of claims 1 to 3, wherein addition products having a molecular weight of from 100 to 1000 of alkylene oxides and at least 4-functional alcohols are used as (b).

6. A process as claimed in any of claims 1 to 5, wherein, in the second stage, ethylene oxide is finely added onto the polyether polyalcohol.

7. A process as claimed in any of claims 1 to 6, wherein polyether polyalcohols (c) having a mean functionality of from > 3 to 7 and a mean hydroxyl number of from 20 to 200 are used.

8. A process as claimed in any of claims 1 to 6, wherein a mixture comprising
from 5 to 80 % by weight of a polyether alcohol having a mean functionality of from > 3 to 7 and a hydroxyl number of from 20 to 200 and obtainable by addition of alkylene oxides onto substances containing active hydrogens, where, in a first stage, at least one substance (a) containing 2 or 3 active hydrogens is reacted with at least one alkylene oxide in the presence or absence of catalysts, subsequently at least one substance (b) which contains at least 4 active hydrogens and, if desired, further catalyst is added to the reaction mixture from the first stage and this mixture is then reacted with at least one alkylene oxide in a second stage,
from 0.1 to 50 % by weight of a polyether polyalcohol having a functionality of from 1.8 to 3 and a hydroxyl number of from 20 to 100 mg KOH/g,
from 10 to 50 % by weight of a graft polyether polyalcohol and
from 0.1 to 5 % by weight of glycerol
is used as compounds which are reactive toward isocyanates.

9. A flexible foam based on polyisocyanate polyaddition products and obtainable by a process as claimed in any of claims 1 to 8.

## Revendications

1. Procédé de préparation de mousses flexibles à base de produits de polyaddition de polyisocyanates par réaction de polyisocyanates avec des composés réactifs vis-à-vis des isocyanates, en présence de catalyseurs, d'agents d'expansion, et éventuellement d'ignifugeants, de matières auxiliaires et/ou d'additifs, caractérisé en ce que l'on utilise en tant que substances réactives vis-à-vis des isocyanates, des polyétherpolyalcools (c) pouvant être obtenus par addition d'oxydes d'alkylène sur des substances ayant des atomes d'hydrogène actifs, où dans une première étape, on fait réagir au moins une substance (a) contenant 2 ou 3 atomes d'hydrogène actifs, éventuellement en présence de catalyseurs, avec au moins un oxyde d'alkylène, puis on ajoute au mélange réactionnel de la première étape au moins une substance (b), présentant au moins 4 atomes d'hydrogène actifs, et éventuellement d'autres catalyseurs, et on fait ensuite réagir ce mélange, dans une deuxième étape, avec au moins un oxyde d'alkylène.

2. Procédé selon la revendication 1, caractérisé en ce que l'on utilise en tant que (a), de l'éthylèneglycol, du 1,2- et/ou du 1,3-propanediol, du 1,2-, 1,3- et/ou du 1,4-butanediol, du di-, tri- et/ou tétraéthylène-, propylène- et/ou butylène-glycol, du triméthylolpropane et/ou du glycérol.

3. Procédé selon la revendication 1, caractérisé en ce que l'on utilise en tant que (a), des produits d'addition, ayant un poids moléculaire de 100 à 1000, d'oxydes d'alkylène sur des alcools bi- et/ou tri-fonctionnels.

4. Procédé selon l'une quelconque des revendications 1 à 3, caractérisé en ce que l'on utilise en tant que (b) du pentaérythrol, du sorbitol et/ou de la saccharose.

5. Procédé selon l'une quelconque des revendications 1 à 3, caractérisé en ce que l'on utilise en tant que (b) des produits d'addition, ayant un poids moléculaire de 100 à 1000, d'oxydes d'alkylène sur des alcools au moins tétra-fonctionnels.

6. Procédé selon l'une quelconque des revendications 1 à 5, caractérisé en ce que l'on réalise l'addition d'oxyde d'éthylène sur le polyétherpolyalcool, dans la deuxième étape pour finir.

7. Procédé selon l'une quelconque des revendications 1 à 6, caractérisé en ce que l'on utilise des polyétherpolyalcools (c) ayant une fonctionnalité moyenne de >3 à 7 et un indice d'hydroxyle moyen de 20 à 200.

8. Procédé selon l'une quelconque des revendications 1 à 6, caractérisé en ce que l'on utilise en tant que composés réactifs vis-à-vis des isocyanates, un mélange contenant :
5 à 80% en poids d'un polyétherpolyalcool ayant une fonctionnalité moyenne de >3 à 7 et un indice d'hydroxyle de 20 à 200, obtenu par addition d'oxydes d'alkylène sur des substances ayant des atomes d'hydrogène actifs, où dans une première étape, on fait réagir au moins une substance (a) contenant 2 ou 3 atomes d'hydrogène actifs, éventuellement en présence de catalyseurs, avec au moins un oxyde d'alkylène, puis on ajoute au moins une substance (b), présentant au moins 4- atomes d'hydrogène actifs, et éventuellement d'autres catalyseurs, au mélange réactionnel de la première étape, et on fait ensuite réagir ce mélange, dans une deuxième étape, avec au moins un oxyde d'alkylène,
0,1 à 50% en poids d'un polyétherpolyalcool ayant une fonctionnalité de 1,8 à 3 et un indice d'hydroxyle de 20 à 100 mg KOH/g,
10 à 50% en poids d'un polyétherpolyalcool greffé et
0,1 à 5% en poids de glycérol.

9. Mousses flexibles à base de produits de polyaddition de polyisocyanates obtenues par un procédé selon l'une quelconque des revendications 1 à 8.
